# EUROPEAN PATENT APPLICATION

(11) **EP 4 768 713 A1**
(43) Date of publication of application: **01.07.2026**
(21) Application number: 24383468.6
(22) Date of filing: 27.12.2024
(51) Int. Cl.: F03D 1/06

(54) **HUB FOR A ROTOR OF A WIND TURBINE**

(71) Applicant: Nordex Energy SE & Co. KG, 22419 Hamburg (DE); Nordex Energy Spain, S.A.U., 31395 Barasoain (Navarra) (ES)
(72) Inventor: ORTELT, Andreas, 22419 Hamburg (DE); PETERS, Lorenz, 22419 Hamburg (DE); ECHARRI LATASA, Román, 31395 Barasoain (Navarra) (ES)
(74) Representative: Epping - Hermann - Fischer

(57) **Abstract**

A present disclosure refers to a hub (1) for a rotor (110) of a wind turbine (100), comprising a hub body (2) with a first flange (3) configured for attaching the hub body to a rotor shaft of the wind turbine and with at least one second flange (5) configured for supporting a rotor blade, the at least one second flange defining a second flange area (6) of the hub body, further comprising at least two stiffening elements (7) extending within at least a portion of the second flange area each stiffening element adjoining the hub body at at least two joints (8), wherein each stiffening element extends in a length direction with reference to an extension direction (S-S) of the rotor shaft.

## Description

The present disclosure relates to a wind turbine, a rotor for a wind turbine, and more particularly to a hub for a rotor of a wind turbine.

In state-of-the-art solutions wind turbines comprise hubs for carrying the rotor blades.

The hub of a wind turbine is supported by a shaft (rotor shaft) typically housed inside a nacelle and arranged to connect the hub carrying the blades to the tower of the wind turbine. In order to support one or more blades, the hub is provided with one or more flanges, usually referred to as a "blade connecting flange". A blade bearing that allows each blade to turn relative to the hub is connected, through bolts, e.g., known as blade root end bolts, or otherwise, between the blade connecting flange of the hub and the blade section.

The hub together with the blades is capable of rotating under the influence of aerodynamic loads around the rotational axis, thereby providing a mechanical output at the shaft.

The hub supporting the bearings of the blades and the long rotor blades is subjected to high magnitude loads, e.g., at and around the flange region of the hub. The loads include but not limited to axial, radial and bending loads. Thus, it is crucial that a hub is robust enough to sustain these loads so that the deformations/deflections are minimized as much as possible, and other inherent effects such as ovalization are subsided.

Thus, it is a task of the present disclosure to provide a solution, how to reinforce the flanges and how to improve the load distribution on the hub in a beneficial manner in comparison to the known, state-of-the-art solutions.

Particularly, manufacturing of the hub shall be facilitated.

The present disclosure refers to a wind turbine, a rotor of a wind turbine, and a hub for a rotor of a wind turbine.

The hub may be a part of the rotor according to the present disclosure and the rotor may be a part of the wind turbine according to the present disclosure.

The hub according to the present disclosure comprises at least a hub body. The hub body may be an essential structural part of the hub.

The hub body according to the present disclosure comprises at least a first flange and at least one second flange. The hub also comprises at least two stiffening elements which may be an integral part of the hub body, or a separate part fixed to the hub body by fixing means.

The first flange is preferably configured for attaching the hub body to a rotor shaft of the wind turbine. Herein, the rotor shaft is configured as the component connecting the hub and the blades constituting the rotor with a nacelle and the tower of the wind turbine.

The second flange is preferably configured for supporting a rotor blade. In other words, one or several rotor blades of the wind turbine are preferably (movably) attached to the hub body via one or several second flanges.

In an embodiment, the hub body comprises three second flanges which are configured to support one rotor blade each, so that a total of three rotor blades are carried by the hub body. Alternatively, the hub body may also comprise one or several third flanges for supporting rotor blades, which are different than the second flanges.

According to the present disclosure, the at least one second flange (or each of the several second flanges) defines a second flange area of the hub body. The second flange area, according to an embodiment, is the inner circumferential area enclosed or circumscribed or defined by the second flange. For example, the second flange area may be characterized by an inner diametrical dimension of the second flange if the second flange is circular, or any other characteristic dimension if the second flange is substantially circular or non-circular.

For example, the first and second flanges are manufactured integrally with the hub body.

The at least two stiffening elements extend within at least a portion of the second flange area. In other words, each stiffening element extends in one (or more) directions to adjoin the hub body, the extension being partly or fully in the second flange area.

According to an embodiment, a portion of one (or more) of the stiffening elements may adjoin the second flange region while a remaining portion of the stiffening element adjoins the hub body that does not comprise the second flange region.

According to some embodiments, each of the stiffening elements adjoins the hub body at at least two joints. In other words, each stiffening element may originate or start at two or more points of the hub body and extend within the second flange area in one (or more) directions. The region of intersection between the stiffening element and the hub body (shell) constitutes the "joint".

According to an embodiment, the joints may be formed inherently when the stiffening element is cast along with the hub.

According to another embodiment, the joint may be a metallurgical joint such as a welded joint, or a mechanical joint like a riveted joint, a bolted joint, or a geometrically defined joint like a dovetail joint, snap joint, and so on.

The at least two joints may be selected from the same or from different types of joints. There may be more than two joints, e.g., three joints, four joints, five joints or more than five joints.

In particular, a length direction of each stiffening element extends with reference to an extension direction of the rotor shaft.

Further, each stiffening element defines an extent, and the term 'defined extent' shall be referenced in some embodiments.

According to some embodiments, the defined extent of each stiffening element is characterized by the stiffening element extending substantially along the extension direction of the rotor shaft defined between the first flange and a fore end of the hub body opposite to the first flange.

According to an embodiment, at least one of the stiffening elements extends in a length direction, whereby the length direction may be defined or referenced to an extension direction of the rotational axis of the rotor shaft, or substantially along the rotational axis of the rotor shaft.

The axis of the rotor shaft is same as the rotational axis of the hub itself, so the terms "hub axis", "rotational axis" or simply "shaft axis" are interchangeably used in the description.

In some embodiments, the length direction may be defined as a direction of extension between the first flange and a fore end of the hub body opposite to the first flange. In other words, the direction of extension is along or substantially along the rotational axis.

The above reference to the rotational axis applies when the wind turbine is viewed from the top. When viewed from the side, the stiffening element may have an inclination relative to the rotational axis.

In other embodiments, the length direction may be defined or referenced as being a longitudinal direction extending from the rotor till the rear end of the nacelle as viewed from the side or the top.

The arrangement of the at least two stiffening elements may result in maximum mechanical stability.

According to some embodiments of the present disclosure, a thickness of at least one stiffening element is constant at least over the defined extent.

The 'defined extent', or simply referred to as the 'extent', according to some embodiments, may be at least one principal direction along which the stiffening elements extend or substantially extend. For example, the extent may be linear relative to a reference direction, e.g., a reference direction being a longitudinal direction (extension) of the rotational axis or the rotor shaft, or may be non-linear.

The stiffening element may be characterized by three distinct dimensions, for example, the extent (or extension direction) as defined above, a width, and a thickness. More particularly, the extension direction (or the extent) may be regarded as a first dimension, and the width direction may be regarded as a second dimension that is perpendicular to the respective extension direction (i.e., the first dimension) of the stiffening element. Thickness (or depth as the context requires) is the third dimension which is perpendicular to the extension direction (first dimension) as well as the width direction (second dimension), as defined before.

The "extent" may be alternately referred to as a direction of extension of the stiffening elements where the stiffening elements have significantly higher dimension in comparison to the dimensions in rest of the dimensions, i.e., the width and the thickness. For example, if the stiffening element is a bar or a beam, the extent is defined along the length direction whose dimension is significantly higher than the dimensions in the other two directions, i.e., width and height/depth.

Thickness direction of the stiffening element may be comprehended as a height or a depth of the stiffening element when the stiffening element is viewed in cross-section or from the side.

According to an embodiment, one or more stiffening elements has a variable width while the thickness remains constant throughout the extent. For example, the stiffening element may be defined by two edge portions with one of the edges extending linearly to constitute a straight edge portion, and another edge portion extends non-linearly (e.g., curvedly) resulting in variable width geometry of the stiffening element.

The variable width may also be comprehended, e.g., in the form of a tapering width when the stiffening element is viewed from the top, while the cross-sectional thickness remains constant along the defined extent.

Each stiffening element may be configured as a stiffening web, for example, as a bar, a beam, a plate, a pipe, or a different type of element with any geometry.

According to an embodiment, a joint of anyone (or more) stiffening element may branch out so as to form two or more sub-joints as the stiffening element adjoins the hub body.

A stiffening element with a constant thickness comes advantageously with a high stiffness and high mechanical stability. Furthermore, casting, de-molding and manufacturing processes associated with the stiffening element according to the present disclosure may be advantageously easy.

Each stiffening element may be cast integrally with the hub or, produced separately and connected to the hub later. The several stiffening elements may be produced by different methods and/or with different properties, e.g., different material properties, different mechanical properties, different geometries, etc.

The stiffening elements may be arranged accordingly such that the dimensions of the several stiffening elements extend in the same directions.

According to an embodiment, the at least two stiffening elements are arranged mirror-symmetrically relative to at least one of a first plane and the rotational axis S-S of the rotor shaft.

According to an embodiment, mirror-symmetry may be referenced to an axis, for example, the rotational axis S-S when two-dimensional features, e.g., the extent and the width of the stiffening element are considered.

According to another embodiment, mirror-symmetry may be referenced to a plane, for example, the first plane when all the three-dimensional features, i.e., the extent, the width and the thickness of the stiffening element are considered.

Furthermore, the structural and geometrical characteristics of the two stiffening elements may be mirror-symmetrical with respect to each other. Herein, the mirror plane may extend along (or parallel to) the thickness direction of the stiffening elements.

A symmetric surface of the two stiffening elements may be defined or referenced relative to the rotational axis, wherein the thickness direction of the stiffening elements extends orthogonally to the symmetrical surface in the direction towards the rotational axis.

According to an embodiment, each stiffening element has a geometry selected from, including but not limited to a rectangular shape, a cuboid or a prismatic shape, a plano-concave shape, a plano-convex shape, a bi-concave shape, a bi-convex shape, and any combinations thereof.

In one embodiment, the stiffening elements may be designed as a fully solid part, or a hollow part, or a combination of both where the solid part has certain hollow features, like a hollow pocket or a recess.

According to an embodiment, at least one of the joints comprises a depressed portion advantageously configured for accommodating at least a portion of a bolt of the rotor blade or of a rotor blade bearing.

The depressed portions are localized surface areas of the joints having elevations lower or slightly lower than those of the surrounding surface of the joints, or lower than an upper surface area of the stiffening element itself away from the joint.

A fillet or a curved recess is one example of the depressed portion.

The depressed portion allows an operator to conveniently place and maneuver tools, machines, etc., for operations, for example, fastening or unfastening rotor blade bolts, etc.

Thus, the bearings of the rotor blades and therefore the blades can be arranged at a precisely specified position.

By arranging the bearings accordingly, the load distribution can be improved, and the design of the hub, blade root section as well as the bearing can be selected to be more variable or flexible.

According to one embodiment, the stiffening elements may have at least one non-planar feature, e.g., an arcuate edge or a bow shaped upper surface. The cross-sectional thickness may be constant along the extension of the stiffening element between the joints.

The mentioned geometry may be the main geometry of the stiffening elements. The stiffening elements may further comprise additional sections deviating from the main geometry.

A symmetrical arrangement of the stiffening elements about least one of the first plane and the rotational axis (S-S) enhances stability and facilitates manufacturing. The distribution of applied forces can be improved.

In another embodiment, the geometrical features of the two stiffening elements may be dissimilar with respect to each other such that the stiffening elements are geometrically asymmetric relative to least one of the first plane and the rotational axis (S-S). The geometrical features may be, for example, the width and the thickness.

According to an embodiment, a geometry of at least one stiffening element is asymmetric relative to at least one of a second plane and an axis P-P substantially perpendicular to the extension direction of the rotor shaft.

According to an embodiment, the first plane may extend along the rotational axis S-S, and the second plane may extend along the axis P-P which is perpendicular to the rotational axis S-S. Further, the first and the second planes are orthogonal planes.

Thus, the distribution of applied forces can be further improved and modified depending on different applying forces at different ends of the hub/flange.

According to an embodiment, at least one of the stiffening elements comprises one, two or more sections across the length direction, such that thickness of each section is constant along the length direction.

This may facilitate efficient casting of the stiffening elements integrally with the hub while providing different mechanical/structural properties corresponding to the different sections.

The freedom of design is advantageously enhanced.

According to one embodiment, one single section may comprise the whole stiffening element.

According to an embodiment, at least one of the stiffening elements comprises at least two sections and an intersection of any two adjacent sections of the two or more sections comprises a transition portion.

The transition portion may be configured as a step, a taper, or a fillet (rounded, elliptical, etc.,), or as a repeating geometrical pattern such as corrugations, flutes, etc., along the width direction, for example.

An appropriate shape of the transition portion advantageously supports or effectuates the load distribution in the stiffening element.

According to an embodiment, at least one stiffening element comprises at least one edge portion that has an arcuate contour.

The described structure facilitates de-molding of the stiffening element during manufacturing.

According to an embodiment, at least one of the stiffening elements comprises at least one provision for supporting a pitch actuator for pitching the rotor blade.

According to an embodiment, each of the two symmetrically arranged stiffening elements as defined before comprises at least one provision for supporting a pitch actuator for pitching the rotor blade. Thus, the at least two provisions for supporting the pitch actuator are arranged symmetrically relative to the rotational axis.

Thus, the pitch actuator may be installed on either side of the rotational axis.

If the pitch actuator on one side breaks down or experiences a malfunction, the pitch actuator may be replaced by a pitch actuator on the other side. Because of the symmetry, the distance between each of the pitch actuators and the rotational axis may be kept constant.

If the pitch actuator renders a fault or exhibits a malfunction, for example, damage to the meshing elements (teeth) of the slewing bearing, the pitch actuator may be removed from that provision and attached to the other provision where there is no damage to the meshing elements (teeth) of the slewing bearing.

The one or several provisions may be configured as recesses or holes which may show a flange structure or resemble a bracket.

A pitch actuator is an actuator for driving and setting a pitch angle of the rotor blade.

Advantageously, no further supporting structures for the pitch actuator are required beside the stiffening element.

According to an embodiment, a cross section of at least one of the stiffening elements comprises a center portion with a constant thickness along the width direction and at least one edge portion configured with a variable thickness along the width direction perpendicular to the respective extension direction of the stiffening element, wherein the thickness is the dimension of the stiffening element perpendicular to the extension direction and the width direction, as defined before.

A cross section is the cross section of the stiffening element (depicting the width and thickness dimensions) perpendicular to the defined extent.

Different specific embodiments are feasible. E.g., the stiffening element may have a constant thickness in the center portion but may have a tapered or fillet structure in the edge portion, whereby the thickness of the edge portion gets narrower.

According to different embodiments, one edge or more edges in the edge portion may be tapered or filleted.

The stiffening element may also comprise two or more edge portions adjacent to the center portion from different sides.

The described structure with variable thick edge portions may facilitate de-molding of the stiffening element during manufacturing.

According to an embodiment, a periphery of the second flange area, in particular an edge portion of the second flange area, and at least one of the stiffening elements defines an opening.

An opening may be an opening that facilitates access to an interior of the rotor blade or a corresponding blade bearing via the second flange area.

For example, the openings may serve to access bolts or a set of bolts used for attaching the blade or the blade bearing to the second flange.

Thus, at least two openings may be provided between the periphery of the second flange area and each of the stiffening elements.

According to an embodiment, a non-linear (e.g., curved) edge portion of one of the stiffening elements may be different from the non-linear (e.g., curved) edge portion of the other stiffening element(s). This may result in geometric asymmetricity about the axis S-S of both the stiffening elements. Furthermore, this results in the openings defined by the respective non-linear (e.g., curved) edge portions of the two stiffening elements confine or close-in different numbers of blade root end bolts of the blade when the blade is assembled.

The curvature or radius of curvature of the curved edge portion of one of the stiffening elements may be different from the curvature of the other stiffening element leading to asymmetricity about the axis S-S. This results in both openings circumscribing different numbers of bolts within the opening when the blade is assembled.

Furthermore, a smaller radius of curvature of the edge portion means increased material in the vicinity of front and rear sides of the hub, leading to better stiffness.

According to an embodiment, the non-linear (e.g., curved) edge portions (defining the opening) may be selected such that a non-linear extent (e.g., curved length) of the non-linear edge portion is minimal. This may result in material and design optimization in respect of the stiffening element in the vicinity of front and/or rear regions of the hub, leading to better stiffness at these regions.

Furthermore, according to an embodiment, the at least two stiffening elements may define an additional aperture between them.

According to an embodiment, the aperture is configured between a pair of stiffening elements and separates the pair of stiffening elements, thus defining two separate stiffening elements which are not directly connected.

The aperture may be configured, for example, as a cutout which allows access to a pitch console associated with the pitch actuators for installation, repair, inspection and/or replacement. The aperture may also provide access passage between the hub region and blade region in a manner similar to the openings.

According to an embodiment, the at least two stiffening elements are configured to support a component across the aperture.

Components can be, for example, components associated with the pitch system, or hatches, or access means like ramps, rails for transporting tools or light machinery having wheels, or lifting and lowering mechanisms/equipment for shifting components, e.g., a pitch drive from one provision to another provision if a malfunction is encountered in that position, or a platform connecting the two stiffening elements, and so on.

Herein, "across the aperture" means extending between the at least two stiffening elements and thereby covering at least a portion of the aperture.

In an embodiment, the component may be, for example, a cabinet for electronic devices which is easily accessible through the aperture.

According to an embodiment, the aperture allows several operations to be performed with respect to the component. For example, the aperture allows lifting or lowering the component relative to the aperture, for example, into the blade interior. The aperture also facilitates assembly or fixing, inspection, repair, replacement, re-orientation, repositioning, etc., of the component or parts associated with the component.

In an embodiment, the component, e.g., the cabinet, is configured to brace the at least two stiffening elements structurally. Thus, the component forms a mechanical support extending between two adjacent stiffening elements. The two stiffening elements do not abut directly to each other.

In an embodiment, the at least two stiffening elements are designed to support a hatch, wherein the hatch is arranged to provide an access between a hub region and a blade region through the aperture. In particular, the hatch is arranged to close the aperture or a portion of the aperture and to open it when needed.

In further embodiments, at least one stiffening element is arranged in a plane different from a plane of at least one other stiffening element.

In other words, a plurality of two or more stiffening elements may extend within at least a portion of the second flange area, wherein at least two different stiffening elements are arranged in two different planes.

For example, one stiffening element may be arranged in a first plane and a second stiffening element may be arranged in a second plane; or two symmetrical stiffening elements may be arranged in a first plane and two other symmetrical stiffening webs may be arranged in a second plane.

According to an exemplary embodiment having two stiffening elements, a first stiffening element extending along a first plane is configured to reinforce a first region, e.g., the second flange area. Further, a second stiffening element extending along a second plane different from the first plane is configured to reinforce a second region, e.g., an intersection between the blade flange area and the hub body (shell part), or entirely the hub body (shell part) away from the second flange area.

According to an embodiment, the at least two stiffening elements in different planes are configured to support a component across the aperture which is configured as a ramp between the two stiffening elements.

The ramp allows movement of a person from one stiffening element to the other.

According to an embodiment, the first plane and the second plane can be parallel or non-parallel.

According to an embodiment, a bridging element may be provided between the first stiffening element and the second stiffening element.

In the following, the present disclosure is illustrated by figures and examples.

The present disclosure is not limited to the shown examples.

The figures show as follows:
Figure 1: Schematic view of a wind turbine according to an exemplary embodiment.
Figure 2: First perspective view illustrating an embodiment of an exemplary hub comprising two parallelly extending stiffening elements.
Figure 3: Second perspective view illustrating the embodiment of the exemplary hub of Figure 2 comprising the two parallelly extending stiffening elements.
Figure 4: Top view illustrating the embodiment of the exemplary hub shown in Figures 2 and 3.
Figure 5: Top view illustrating a further embodiment of an exemplary hub comprising two parallelly extending stiffening elements and a cabinet provided on the stiffening elements.

Figure 6: Top view illustrating a further embodiment of an exemplary hub comprising two parallelly extending stiffening elements defining an aperture and a hatch for closing the aperture.

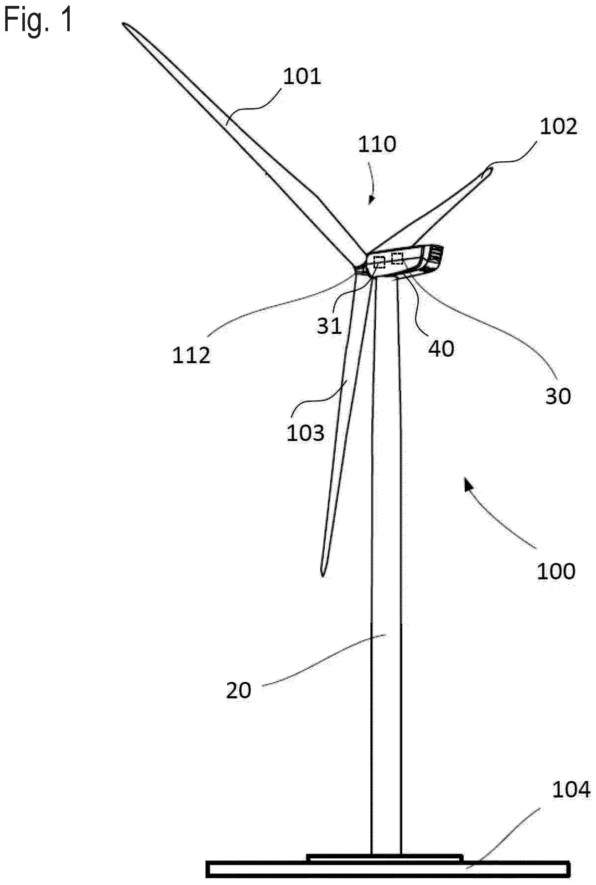

Figure 1 shows a wind turbine 100 which comprises a tower 20. The tower 20 is fixed to the ground by means of a foundation 104. At one end of the tower 20, opposite to the ground, a nacelle 40 is rotatably mounted. The nacelle 40 comprises, for example, a generator (not shown) which is coupled to a rotor 110 via a gearbox (not shown). The rotor 110 comprises three (wind turbine) rotor blades 101, 102, 103, which are arranged on a rotor hub 112, said rotor hub 112 being connected to a rotor shaft (not shown).

During operation, the rotor 110 is set in rotation by an air flow, for example wind interacting with the blades 101, 102, 103 resulting in forces acting on the blades 101, 102, 103. This rotational movement is transmitted to the generator via the drive train comprising, inter alia, the rotor shaft and the gearbox. The generator converts the mechanical energy of the rotor 110 into electrical energy.

The nacelle 40 has to be rotated into the wind to optimize the energy output of the wind turbine 100. This is attained through the yaw system (not shown). Moreover, the pitch angles of the rotor blades 101, 102, 103 have to be adjusted according to the wind speed and other conditions to optimize the performance of the rotor and to keep the energy yield of the turbine at desired levels. In order to control and operate several systems, the wind turbine comprises a main controller 30 (turbine controller), and optionally an auxiliary control unit 31 which is arranged in the nacelle 40 and communicatively coupled with the main controller 30.

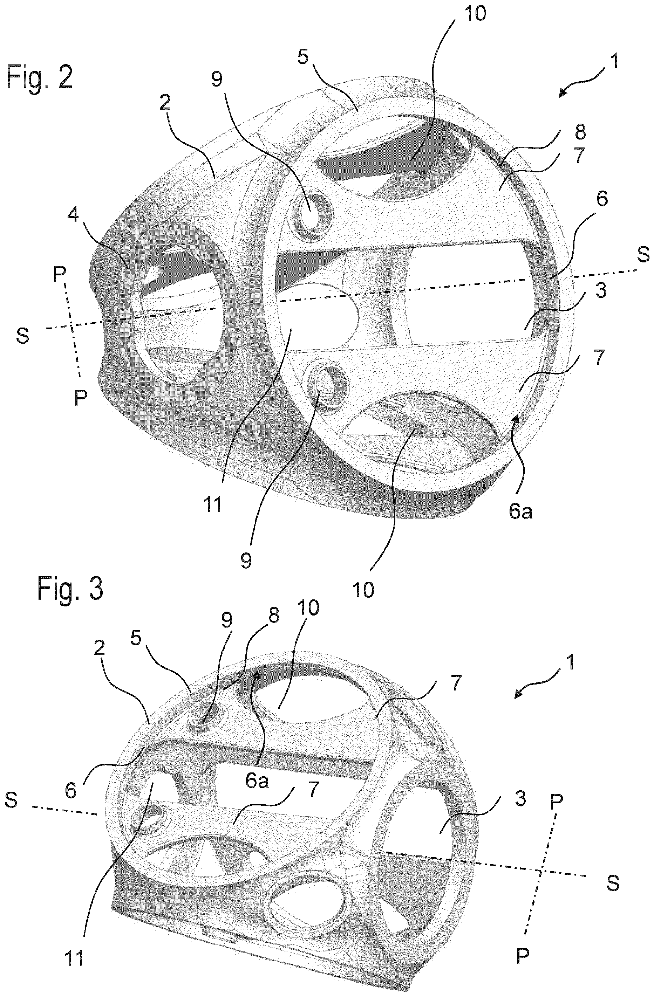

Figures 2 to 4 show several views of a hub 1 comprising the hub body 2 shaped, e.g., as a hollow circular body. The hub body 2 may also be referred to as a shell of the hub.

The hub body 2 has a first flange or shaft connecting flange 3 which may be connected to a rotor shaft of a wind turbine, such that the shaft connects the hub 1 or the hub body 2 to a nacelle of the wind turbine.

The hub body 2 has a fore end 4 opposite to the side of the shaft flange 3. The first flange 3 or the vicinity of the first flange 3 may be interchangeably referred to as a rear end 3 of the hub body 2 throughout the description.

A shaft axis S-S, also referred to as a rotational axis of the shaft or the hub, may extend from the rear end 3 to the fore end 4 of the hub body 2 with respect to hub 1 as shown in figure 2.

Furthermore, around the circumference of the hub 1, between the fore end 4 and the rear end 3, one or more second flanges (or blade flanges) 5 are provided.

In the example, three second flanges 5 are illustrated, which are arranged regularly around the circumference of the hub 1.

Here, "regularly" means symmetric arrangement of the second flanges along the circumference with uniform distances between each of the second flanges 5. For example, if there are three second flanges corresponding to three rotor blades, angular spacing between two adjacent flanges is exactly 120 degrees.

Each flange may have a circular (e.g., a ring) shape.

The blade flanges 5 support the rotor blades via blade bearings. The blade bearings facilitate turning or pitching of each blade about a central axis of the respective second flange.

The bearings of the blades are usually arranged and fixed by bolts to the blade flanges 5.

Thus, the loads acting on the blades are transferred to the second flanges 5 and then to the hub 1.

A second flange area 6 of the second flange 5 is an inner circumferential area defined or circumscribed or enclosed by the second flange 5. For example, the second flange area 6 may be bound or circumscribed by periphery 6a of the second flange 5.

The second flange area 6 may define two opposite points that face each other along the second flange area 6, for example, two diametrically opposite points.

According to an embodiment, the two points may be diametrically opposite points which may be substantially defined along or coinciding with or colinear with the rotational axis S-S.

According to a non-limiting, exemplary embodiment, two stiffening elements 7 are depicted in figures 2-6. In order to improve load distribution, the two stiffening elements are arranged in at least one of the second flanges 5 between two points of the flange area 6.

At the two points, each stiffening element 7 firmly adjoins the second flange 5 via joints 8.

In the example, both stiffening elements 7 in the second flange area extends mainly in a length direction of the rotational axis S-S, which means from the fore end 4 to the rear end 3.

When viewed from the side, it may be seen that a plane of the stiffening elements 7 does not extend entirely parallel to the shaft axis S-S but may extend at an angle to the axis. The inclination may be due to the cone angle inclination of the second flange 5 relative to the shaft axis S-S. However, when Figure 2 is viewed from the top, the stiffening element 7 may be seen extending along the shaft axis S-S.

Further, in alternate embodiments, the stiffening elements 7 may extend at an inclination relative to the shaft axis S-S as viewed from the top, e.g., at 90 degrees relative to the axis S-S. However, the stiffening elements 7 extending along the extension direction of the shaft axis S-S may be regarded as a preferable embodiment.

According to one embodiment, at least one portion, e.g., an edge portion of the two stiffening elements extends parallel or substantially parallel with respect to the rotational axis S-S, and consequently, also with respect to each other.

According to another embodiment, an edge portion of one or both the stiffening elements extends at an inclination relative to the rotational axis S-S. However, the at least two stiffening elements may not meet at any point within the second flange area 6.

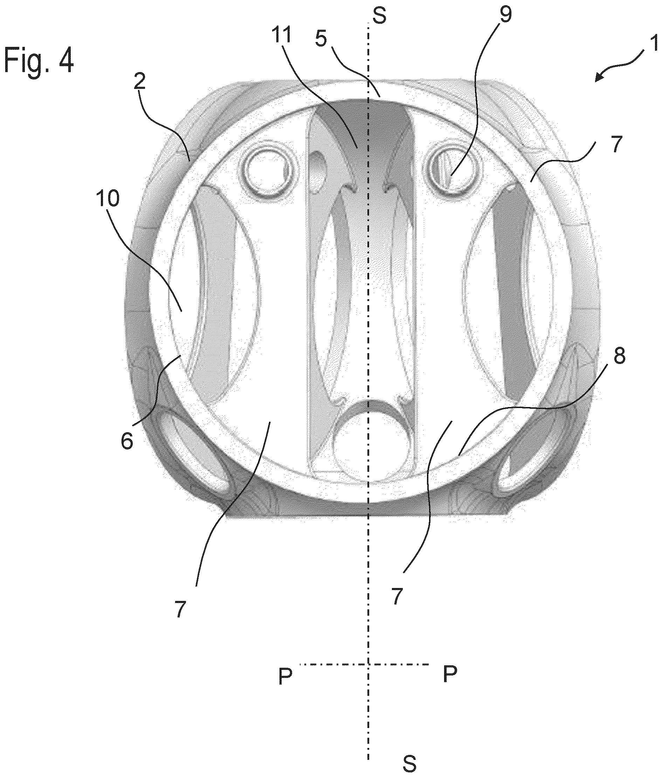

According to another embodiment, an edge portion of one or both the stiffening elements has a non-linear contour, e.g., a curved contour (characterized by a given radius of curvature). For example, as depicted in figure 4, each stiffening element 7 is defined by a linear edge portion (proximal to the rotational axis) and an opposite non-linear (e.g., curved) edge portion. The non-linear edge portion may be advantageous in terms of providing variable properties including, but not limited to mechanical properties, e.g., the stiffness, along the extent of the stiffening element 7 while improving other effects, e.g., castability, material optimization, and so on.

The non-linear edge portion may also render the stiffening element have a variable width along the extent.

According to an embodiment, a non-linear (e.g., curved) edge portion of one of the stiffening elements may be geometrically different from the non-linear (e.g., curved) edge portion of the other stiffening element(s). This may result in geometric asymmetricity about the axis S-S of both the stiffening elements 7.

Besides, between each of the two stiffening elements 7 and the periphery 6a of the second flange area, an opening 10 for accessing the blade from the hub body 2 through the flange 5 is provided.

Furthermore, the openings 10 defined by the respective curved edge portions of both the stiffening elements confine or close-in different numbers of blade root end bolts of the blade when the blade is assembled due to geometric asymmetricity about the rotational axis S-S explained above.

According to an embodiment, the non-linear (e.g., curved) edge portions (defining the opening) may be selected such that a non-linear extent (e.g., curved length) of the non-linear edge portion is minimal. This may result in material and design optimization in respect of the stiffening element in the vicinity of front and rear regions of the hub, leading to better stiffness at these regions.

In addition to the opening 10, an additional aperture 11 is recessed in the center between the two stiffening elements 7 for additional access or for arranging a component, e.g., a cabinet for electronic devices as mentioned above.

In other words, a spacing or gap between the two stiffening elements is configured as the aperture 11 for arranging a component.

Further, as shown in figures 2 to 4, one provision 9 for arranging the pitch actuator (not shown) is arranged in each of the two stiffening elements, symmetrically to the shaft axis. Thus, separate pitch actuator supporting flanges (or brackets) are omitted.

Malfunctions of a pitch actuator positioned in one of the provisions may be remedied by shifting the pitch actuator to the other provision or by providing a second pitch actuator in the second provision.

Besides, several further geometries and combinations are feasible.

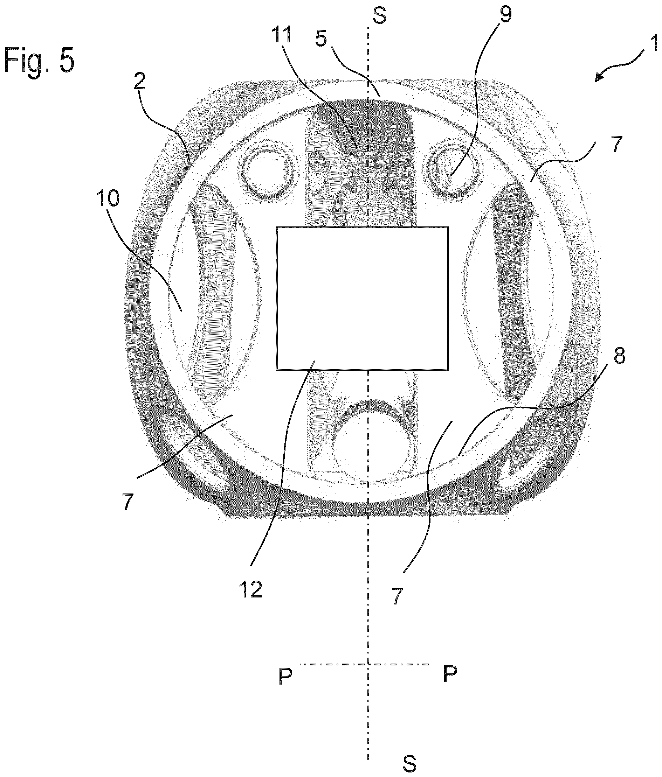

Figure 5 shows an additional embodiment which is essentially similar to the embodiment explained earlier.

In this embodiment, additionally, a component 12 which may be, for example, a cabinet 12 for electric devices is provided on the stiffening elements 7.

Besides, the component 12 forms a web connecting the stiffening elements 7 mechanically and thus improves the stiffness and mechanical stability of the arrangement.

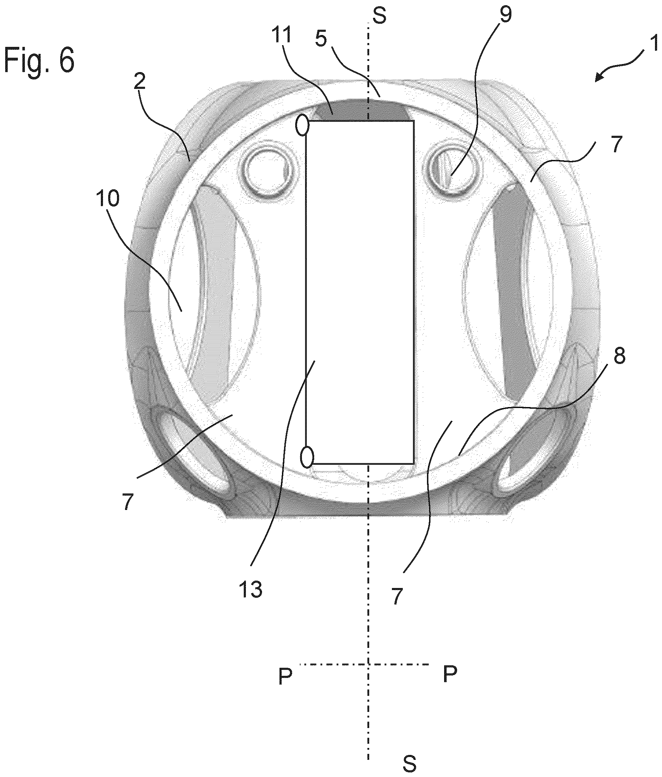

The component 12 is accessible through the aperture 11 which may also be closed by a hatch 13 as shown in figure 6. The hatch 13 may be hinged to the stiffening element 7 or may be movably connected to the stiffening element 7 through a suitable mechanism.

According to an embodiment, the aperture 11 allows several operations to be performed with respect to the component 12.

For example, the aperture allows lifting or lowering the component relative to the aperture, for example, lowering of the component into the blade interior from the hub interior. The aperture 11 also facilitates assembly or fixing, inspection, repair, replacement, re-orientation, repositioning, etc., of the component or parts associated with the component.

Component 12 can be, for example, components associated with the pitch system, or hatches, or access means like ramps, or rails for transporting tools or light machinery having wheels, or lifting and lowering mechanisms for shifting components, e.g., for shifting a pitch drive from one provision to another provision if a malfunction is encountered in that position, or a platform connecting the two stiffening elements, and so on.

In a further embodiment, at least one stiffening element is arranged in a plane different from a plane of at least one other stiffening element.

In other words, at least two different stiffening elements are arranged in two different planes, e.g., a first plane and a second plane. A first stiffening element extending along the first plane is configured to reinforce a first region, e.g., the second flange area 6. Further, a second stiffening element extending along the second plane different from the first plane is configured to reinforce a second region, e.g., an intersection between the second flange area 6 and the hub body (shell part) 2, or entirely the hub body (shell part) away from the second flange area 6.

According to an embodiment, the first plane and the second plane can be parallel or non-parallel.

### List of reference signs

- 1, 112: hub
- 2: hub body
- 3: rear end or first flange or shaft flange
- 4: fore end
- 5: second flange or blade flange
- 6: flange area of the second flange
- 6a: periphery of the second flange
- 7: stiffening elements
- 8: joints
- 9: provisions
- 10: openings
- 11: aperture
- 12: component, cabinet
- 13: hatch
- 20: tower
- 30,31: controller
- 40: nacelle
- 100: wind turbine
- 101, 102, 103: rotor blades
- 104: foundation
- 110: rotor
- S-S: shaft axis/rotational axis
- P-P: axis perpendicular to the shaft axis

## Claims

1. A hub (1) for a rotor (110) of a wind turbine (100), comprising:
- a hub body (2), comprising:
• a first flange (3) configured for attaching the hub body to a rotor shaft of the wind turbine, and
• at least one second flange (5) configured for supporting a rotor blade, the at least one second flange defining a second flange area (6) of the hub body,
- at least two stiffening elements (7) extending within at least a portion of the second flange area, each stiffening element adjoining the hub body at at least two joints (8),
- wherein each stiffening element extends in a length direction with reference to an extension direction (S-S) of the rotor shaft.

2. The hub according to claim 1, wherein each stiffening element extends substantially along the extension direction of the rotor shaft (S-S) defined between the first flange and a fore end of the hub body opposite to the first flange.

3. The hub according to any one of claims 1 to 2, wherein:
- the at least two stiffening elements are arranged mirror-symmetrically relative to at least one of a first plane and a rotational axis (S-S) of the rotor shaft.

4. The hub according to any one of claims 1 to 2, wherein a geometry of at least one stiffening element is asymmetric relative to at least one of a second plane and an axis (P-P) substantially perpendicular to the extension direction of the rotor shaft.

5. The hub according to any one of claims 1 to 4, wherein:
- each stiffening element comprises one, two or more sections along the length direction, and
- a thickness of each section is constant along the length direction.

6. The hub according to claim 5, wherein an intersection of two adjacent sections of the two or more sections comprises a transition portion, which is configured as a step, a taper, a fillet, or combinations thereof.

7. The hub according to any one of claims 1 to 6, wherein:
- at least one stiffening element comprises at least one edge portion that has an arcuate contour.

8. The hub according to any one of claims 1 to 7, wherein at least one stiffening element comprises at least one provision for supporting a pitch actuator for pitching the rotor blade.

9. The hub according to any one of claims 1 to 8, wherein a cross-section of at least one stiffening element comprises a center portion with a constant thickness, and at least one edge portion configured with a variable thickness along a width direction perpendicular to the length direction of the at least one stiffening element.

10. The hub according to any one of claims 1 to 9, wherein
a periphery of the second flange area and at least one of the stiffening elements defines an opening (10) .

11. The hub according to any one of claims 1 to 10, wherein the at least two stiffening elements define an aperture (11) between them.

12. The hub according to claim 11, wherein the at least two stiffening elements are configured to support a component (12) across the aperture.

13. The hub according to claim 12, wherein the component is configured to brace the at least two stiffening elements structurally.

14. The hub according to claim 11, wherein the at least two stiffening elements are designed to support a hatch (13), wherein the hatch is arranged to provide an access between a hub region and a blade region through the aperture.

15. The hub according to any one of claims 1 to 14, wherein at least one stiffening element is arranged in a plane different from a plane of at least one other stiffening element.
